# EUROPÄISCHE PATENTSCHRIFT

(11) **EP 0 566 576 B1**
(45) Veröffentlichungstag und Bekanntmachung des Hinweises auf die Patenterteilung: **05.06.1996**
(21) Anmeldenummer: 91919450.6
(22) Anmeldetag: 06.11.1991
(51) Int. Cl.: G05D 7/06

(54) **VERFAHREN UND VORRICHTUNG ZUR MASSENSTROMREGELUNG**
PROCESS AND DEVICE FOR MASS FLOW REGULATION
PROCEDE ET DISPOSITIF DE REGULATION D'UN FLUX MASSIQUE

(30) Priorität: 09.11.1990 DE 4035620
(43) Veröffentlichungstag der Anmeldung: 27.10.1993
(73) Patentinhaber: KUSTERER, Helmut, D-70597 Stuttgart (DE); SCHERF, Helmut, D-70597 Stuttgart (DE)
(72) Erfinder: KUSTERER, Helmut, D-70597 Stuttgart (DE); SCHERF, Helmut, D-70597 Stuttgart (DE)
(74) Vertreter: Preissner, Nicolaus, Dipl.-Ing.
(86) Internationale Anmeldenummer: EP9102100
(87) Internationale Veröffentlichungsnummer: WO9209023

(56) Entgegenhaltungen:
- EP-A- 0 183 075
- EP-A- 0 264 032
- EP-A- 0 320 800
- DE-A- 2 654 326
- PATENT ABSTRACTS OF JAPAN vol. 8, no. 169 (P-292)(1606) 4. August 1984 & JP-A-59 062 920

## Beschreibung

Die Erfindung betrifft eine Vorrichtung zur Regelung, Steuerung oder Schaltung des Durchflusses eines in einer Leitung strömenden Fluides mit einem entlang einem Verstellweg verstellbaren, einen Durchflußquerschnitt begrenzenden Stellkörper und mit einer mit einem als Steuerspannung ausgebildeten Steuersignal beaufschlagbaren Motoranordnung, deren mit einer zu der Steuerspannung proportionalen Drehzahl umlaufende Motorwelle über Getriebemittel mit dem Stellkörper gekoppelt ist.

In der Verfahrenstechnik wird zur Massenstromregelung von in Leitungen strömenden flüssigen oder gasförmigen Medien üblicherweise der in einem Massenstromregler aufgrund der Regelabweichung ermittelte Stellweg als Stellgröße herangezogen. Dieser Stellweg dient einem unterlagerten Positionierregelkreis als Sollwert, aufgrund dessen ein Positionsregler eine Ventilspindel mit konstanter Geschwindigkeit in eine neue Position bewegt wird. Als Stellantrieb wird hierfür meist ein drehzahlgeregelter Asynchronmotor verwendet, der unabhängig von dem zurückzulegenden Weg mit konstanter Drehzahl läuft. Aufgrund der sich hierbei vor allem bei langen Stellwegen ergebenden langen Stellzeiten ist das bekannte Verfahren für schnellablaufende Prozesse ungeeignet. Dies gilt um so mehr, als auch die trägen Massen und die Reibung in den bekannten Motor-Getriebeeinheiten relativ groß sind. Hinzu kommt, daß die Motor-Getriebeeinheit regelmäßig ein relativ großes Bewegungsspiel und damit eine Hysterese aufweist, die sich nachteilig auf das dynamische Regelverhalten und die Regelgenauigkeit auswirkt.

Aus der EP-A-0 183 075 ist eine Regeleinrichtung bekannt, bei welcher der Motor als Niederspannungsgleichspannungsmotor ausgebildet ist, der über ein Pulsbreiten-moduliertes Treibersignal angesteuert wird.

Das Treibersignal besteht aus Impulsen gleicher Frequenz, deren Breite nach Maßgabe der Regelabweichung moduliert wird. Aufgrund ihrer geringen Dynamik können mit einer derartigen Motoranordnung nur relativ langsam ablaufende Prozesse gesteuert oder geregelt werden.

Darüberhinaus kann es aufgrund der hohen Getriebeuntersetzung im Störfalle an der Antriebswelle zu einer Beschädigung oder Zerstörung des Ventiles kommen. Dies ist vor allem dann relevant, wenn am Stellglied hohe Drehmomente erforderlich sind.

Aus der DE 2654326 B1 ist eine Vorrichtung zum Messen und Regeln von Mengenströmen bekannt, bei welcher zur Bestimmung des Durchflusses der Wirkdruck gemessen wird. Hierzu wird ein einen Schwingkreis enthaltendes Gerät verwendet, welcher über den Wirkdruck durch Verstellung elektrischer Größen zu einem vom Wirkdruck abhängigen Frequenzsignal führt. Diese Frequenz wird mittels eines elektrischen Zählers in ein digitales Signal umgesetzt. Der Schrittmotor wird mit einem aus dem digitalen Signal abgeleiteten Signal angesteuert, und zwar unter Einstellung einer Hubhöhe der Segmentblende durch die Zahl der am Schrittmotor angelegten Impulse.

Aus der JP-A-5962920 ist bekannt, zur Steuerung eines Stellkörpers einen Servomotor zu verwenden.

Ausgehend hiervon liegt der Erfindung die Aufgabe zugrunde, die eingangs genannte Vorrichtung dahingehend zu verbessern, daß auch schnell ablaufende massenstrombedingte Prozesse geregelt, gesteuert und geschaltet werden können und eine Beschädigungsgefahr vermieden wird.

Zur Lösung dieser Aufgabe wird erfindungsgemäß eine Vorrichtung zur Regelung, Steuerung oder Schaltung des Durchflusses eines in einer Leitung strömenden Fluides mit den Merkmalen des Anspruches 1 vorgeschlagen. Weitere vorteilhafte Ausgestaltungen und Weiterbildungen der Erfindung ergeben sich aus den abhängigen Ansprüchen.

Durch die erfindungsgemäße Verwendung eines Servomotors, dessen Motorwelle mit einer zu einer Steuerspannung proportionalen Drehzahl umläuft, kann mit der erfindungsgemäßen Vorrichtung eine Regelung, Steuerung und Schaltung auch von schnell ablaufenden Massenstrombedingten Prozessen erfolgen. Die Steuerspannung für die Elektronik des Servomotors ist vorteilhafterweise als Ausgangssignal eines Massenstromreglers abgreifbar, der einen an die Regelaufgabe angepaßten Regelalgorithmus enthält und beispielsweise als PID-Regler ausgebildet sein kann.

Mit der Durchrastkupplung kann das Ventil vor mechnischen Beschädigungen geschützt werden, wenn es bei der Vorschubbewegung auf Anschlag geht. Die Durchrastkupplung sollte zwar torsionssteif und spielfrei ausgebildet sein, sollte jedoch eine Biegung zulassen, damit Fertigungsungenauigkeiten, wie z.B. Achsversatz, Fluchtfehler und dergleichen, ausgeglichen werden können.

Weiter kann die Durchrastkupplung mit einem bei Überschreiten des Grenzdrehmoments oder bei einem Durchrastvorgang ansprechenden Endschalter ausgestattet werden, mit welchem beispielsweise ein Abschaltvorgang ausgelöst und/oder der Öffnungs- oder Schließzustand des Stellkörpers angezeigt werden kann.

Bei einer weiteren vorteilhaften Ausgestaltung der Erfindung weist der Dreh-Schubwandler ein mit der Motorwelle starr mitdrehendes Gewindeteil und einen mit einem Gegengewinde auf dem Gewindeteil geführten, den Stellkörper tragenden nichtdrehenden Stößel auf.

Vorteilhafterweise weist das Gewindeteil ein Außengewinde auf, auf dem der Stößel mit einem Innengewinde geführt ist. Grundsätzlich ist es jedoch auch möglich, das Gewindeteil als Muttergewinde auszubilden, in das der Stößel mit einem Außengewinde eingreift.

Eine nahezu reibungs- und spielfreie Führung läßt sich dadurch erreichen, daß der Dreh-Schubwandler als Kugelgewindetrieb, Rollengewindetrieb oder Planetenrollengewindetrieb ausgebildet ist.

Bei verschiedenen Erfindungsvarianten kann der Stellkörper als Lochdrosselkörper, als gegen einen Ventilsitz verschiebbarer Ventilkörper oder als Schieber ausgebildet werden. Ein Lochdrosselkörper hat hierbei den Vorteil, daß durch die Wahl der Größe und der geometrischen Verteilung der Drosselöffnungen auf dem Drosselkörper auf einfache Weise eine fur den Regelvorgang günstige Durchflußkennlinie realisiert werden kann.

Der den Stellkörper tragende Stößel wird vorteilhafterweise von außen über eine zweckmäßig als Stopfbuchse ausgebildete fluiddichte Schubführung in eine Fluidleitung eingeführt. Zur weiteren Verbesserung der Abdichtung kann zwischen der Schubführung und dem Stößel zusätzlich ein fluiddichter Faltenbalg angeordnet werden.

Weiter kann gemäß der Erfindung ein vorzugsweise induktiver oder inkrementaler Verstellwegaufnehmer oder ein Wegpotentiometer vorgesehen werden, der mit einfachen Mitteln eine Vorpositionierung des Regelventils mit Hilfe eines unterlagerten Stellungsregelkreises ermöglicht. Aus Sicherheitsgründen kann es ferner zweckmäßig sein, mindestens einen, zweckmäßig zwei entlang dem Verstellweg einstellbare, durch den Stellkörper unmittelbar oder mittelbar betätigbare Endschalter vorzusehen, mit denen jede beliebige Stellung des Stellkörpers, vorzugsweise die Endlagen des Stellkörpers markiert und beliebige Schaltvorgänge ausgelöst werden können.

Das vorstehend beschriebene, erfindungsgemäße Regelventil läßt sich gemäß einer bevorzugten Ausgestaltung der Erfindung auch als Schnellschaltarmatur betreiben. Der Servomotor wird hierzu zweckmäßig mit einer vorzugsweise elektrisch ansteuerbaren Haltebremse ausgestattet. Durch Vorgabe einer konstanten oder zeitabhängigen Steuerspannung kann dem Ventil eine bestimmte Schließoder Öffnungscharakteristik aufgeprägt werden. Insbesondere kann der Schließvorgang durch Vorgabe einer von dem Fluiddruck und/oder seiner zeitlichen Änderung abhängigen Steuerspannung geregelt werden.

Gemäß einer weiteren bevorzugten Ausgestaltung der Erfindung kann zwischen der Motorwelle und dem Gewindeteil des Dreh-Schub-Wandlers eine vorzugsweise elektromagnetisch betätigbare Schaltkupplung angeordnet werden, während der Dreh-Schub-Wandler mittels mindestens einer Feder in Öffnungsrichtung oder in Schließrichtung des Schließkörpers vorspannbar und bei gelöster Schaltkupplung unter Durchdrehen des Gewindeteils in der betreffenden Richtung bewegbar sein kann. Damit läßt sich eine Fail-Safe-Funktion verwirklichen, aufgrund der die Armatur in Notsituationen, beispielsweise bei Stromausfall oder durch Betätigung eines Notschaltknopfes in den sicheren Schließ- oder Öffnungszustand gebracht wird.

Im folgenden wird die Erfindung anhand eines in der Zeichnung in schematischer Weise dargestellten Ausführungsbeispiels näher erläutert. Es zeigen
- Fig. 1: ein Blockschaltbild eines Massenstrom-Regelkreises;
- Fig. 2: ein Servoantrieb zur Direktansteuerung eines Regelventils für den Einsatz im Regelkreis nach Fig. 1;
- Fig. 3: ein gegenüber Fig. 2 abgewandeltes Ausführungsbeispiel eines Servoantriebs zur Direktansteuerung eines Regelventils;
- Fig. 4: eine Abwandlung des Regelventils nach Fig. 3 für den Einsatz als Schnellöffnungsarmatur mit Fail-Safe-Charakteristik.

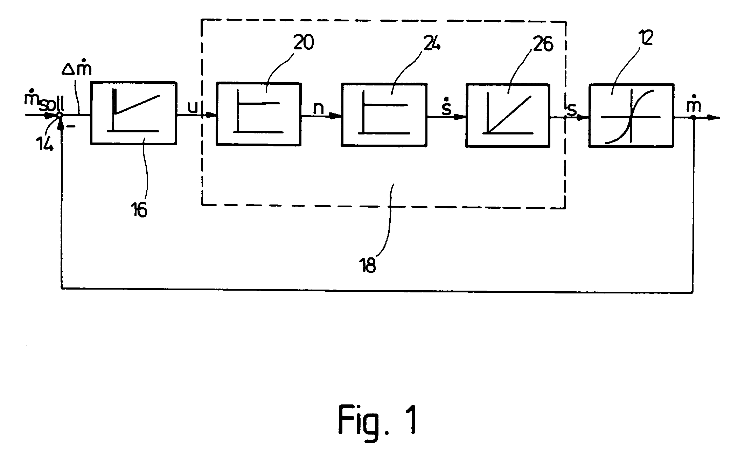

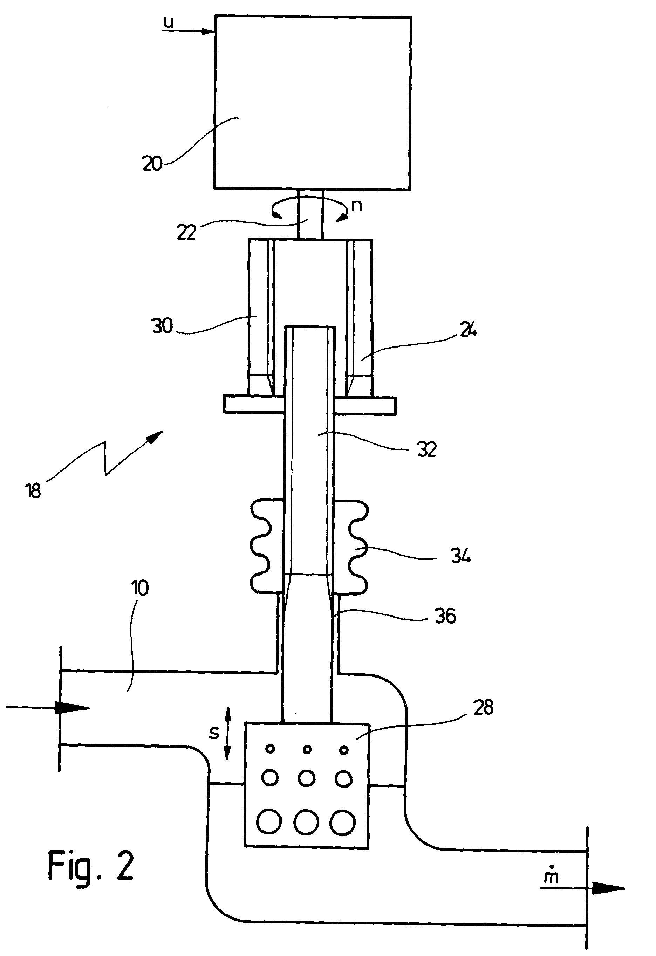

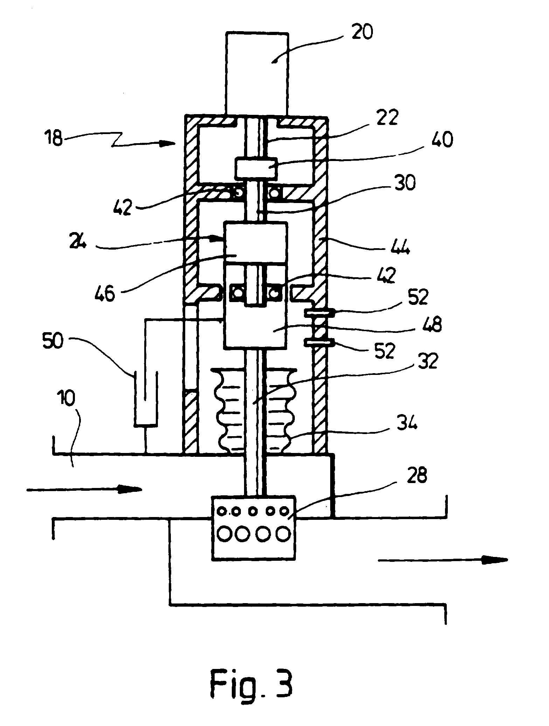

Der in Fig. 1 gezeigte Regelkreis ist zur Regelung des Massenstroms ṁ eines durch eine Leitung 10 (Fig. 2 und 3) strömenden flüssigen oder gasförmigen Fluids bestimmt. Der am Ausgang eines durch eine im gezeigten Ausführungsbeispiel nichtlineare Kennlinie definierten Ventils 12 gemessene oder berechnete Massenstrom wird in einem Vergleicher 14 mit einem Sollwert ṁₛₒₗₗ unter Bildung der Regelabweichung Δṁ im Sinne einer Rückkopplung verglichen. Die Regelabweichung Δṁ wird in einem Regler 16 unter Anwendung eines beispielsweise als PID-Regler ausgebildeten Regelalgorithmus modifiziert. Das dabei entstehende Ausgangssignal u wird an den Eingang eines in gestrichelten Linien angedeuteten Servoantriebs 18 für das Ventil 12 angelegt. Der Servoantrieb 18 umfaßt einen mit dem Signal u als Steuerspannung beaufschlagten Servomotor 20, dessen Motorwelle 22 mit einer zur Eingangsspannung u lastunabhängig proportionalen Drehzahl n angetrieben wird. Die Drehzahl n wird in einem als Proportionalglied ausgebildeten Dreh-Schub-wandler 24 in eine zur Drehzahl proportionale Stellgeschwindigkeit ṡ umgesetzt, aus der sich über ein Integrationsglied 26 der die Position des Ventil-Stellkörpers 28 bildende Verstellweg s ergibt.

Wie aus Fig. 2 zu ersehen ist, kann der Servoantrieb 18 als mechanischer Direktantrieb ausgebildet werden. Der Dreh-Schubwandler ist dort durch ein mit der Motorwelle starr verbundenes Gewindeteil 30 und einen mit einem Außengewinde in das Innengewinde des Gewindeteils 30 eingreifenden Ventilstößel 32 gebildet. Um die Drehbewegung der Motorwelle 22 möglichst spiel- und reibungsfrei in die Schubbewegung des Stößels 32 umsetzen zu können, ist der Stößel zweckmäßig als Kugelgewindespindel oder Kugelumlaufspindel ausgebildet. Der Stößel 32 greift durch einen Faltenbalg 34 und eine Stopfbuchse 36 in den Fluidkanal 10 ein und trägt an seinem freien Ende den als Lochdrosselkörper ausgebildeten Ventiloder Stellkörper 28.

Bei dem in Fig. 3 gezeigten Ausführungsbeispiel ist die Motorwelle 22 des Servomotors 20 über eine Durchrastkupplung 40 mit dem ein Außengewinde tragenden, in Drehlagern 42 des Gehäuses 44 gelagerten Gewindeteil 30 des Dreh-Schubwandlers 24 verbunden. Auf dem Gewindeteil 30 ist das Muttergewinde 46 eines im Gehäuse 44 drehfest geführten Schubrohrs 48 angeordnet. Der auf diese Weise gebildete Dreh-Schubwandler 24 ist zweckmäßig als Rollengewindetrieb oder als Planetenrollengewindetrieb ausgebildet, der weitgehend reibungsfrei ist und durch entsprechende Verspannung spielfrei gestellt ist. Das Schubrohr ist an seinem dem Muttergewinde 46 gegenüberliegenden Ende starr mit dem Stößel 32 verbunden, der durch einen Faltenbalg 34 und eine nicht dargestellte Stopfbuchse 36 in den Fluidkanal 10 eingreift und an seinem freien Ende den Stellkörper 28 trägt. Zwischen dem Schubrohr 28 und einem gehäusefesten Teil ist ein induktiver oder inkrementaler Wegaufnehmer 50 oder ein Wegpotentiometer zur laufenden Messung des Verstellwegs des Stellkörpers 28 angeordnet, der mit einfachen Mitteln eine Vorpositionierung des Regelventils ermöglicht. Weiter sind zwei längs des Verstellwegs einstellbare Endschalter 52 vorgesehen, die vorzugsweise auf die Endlagen des Stellkörpers 28 ansprechen und denen vor allem eine Sicherheitsfunktion zukommt.

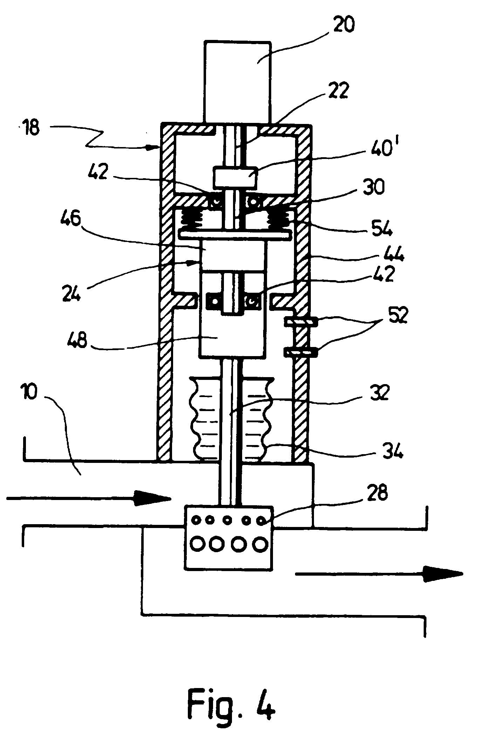

Durch die in Fig. 4 gezeigten Modifikationen kann das Regelventil nach Fig. 3 als Schnellöffnungsarmatur mit Fail-Safe-Charakteristik eingesetzt werden. Zu diesem Zweck wird der Servomotor 20 zweckmäßig mit einer in der Zeichnung nicht dargestellten Haltebremse ausgestattet, die durch Anlegen einer Bremsenbetriebsspannung geöffnet werden kann. Weiter ist statt der oben beschriebenen Durchrastkupplung 40 eine zwischen der Motorwelle 22 und dem Gewindeteil 30 des Dreh-/Schub-Wandlers angeordnete, elektromagnetisch betätigbare Schaltkupplung vorgesehen, die im bestromten Zustand eingekuppelt und im stromlosen Zustand ausgekuppelt wird. Eine dritte Abwandlung besteht darin, daß zwischen dem Gehäuse 44 und dem Schubrohr 48 eine Schließfeder 54 angeordnet ist, die in Schließrichtung des Stellkörpers 28 vorgespannt ist.

Beim Öffnungsvorgang führt der den Stellkörper 28 tragende Stößel 32 eine Hubbewegung aus, wobei gleichzeitig die Schließfeder 54 in Schließrichtung vorgespannt wird. Der Öffnungszustand wird beispielsweise durch einen der Endlagenschalter 52 oder durch einen Durchrastvorgang an der Kupplung 40' angezeigt. Damit der Servomotor 20 im geöffneten Ventilzustand nicht ständig sein Arbeitsmoment aufbringen muß, wird die Haltebremse geschlossen und der Servomotor stromlos gestellt.

Bei einem Schließvorgang wird der Servomotor 20 zunächst eingeschaltet, so daß er bei 0 Volt Steuerspannung im Stillstand sein Haltemoment entwickelt. Anschließend wird durch Anlegen der Bremsenbetriebspannung die Haltebremse geöffnet. Sodann kann durch Anlegen der konstanten oder zeitabhängigen Steuerspannung an den Servomotor 20 dem Ventil eine bestimmte Schließcharakteristik aufgeprägt werden (z.B. schnellstmöglicher Schließvorgang, bei dem noch keine großen Druckstöße auftreten). Der geschlossene Zustand wird wieder über einen der Endschalter 52 oder einen Durchrastvorgang im Bereich der Kupplung 40' detektiert. Im Schließzustand kann die Haltebremse des Servomotors 20 geschlossen und der Servomotor stromlos gestellt werden.

In einer Notsituation, beispielsweise bei Stromausfall oder durch Betätigen eines Notabschaltknopfes, gelangt die in Fig. 4 gezeigte Armatur wie folgt automatisch in ihre Schließstellung: Die Elektrokupplung 40' wird stromlos gestellt und dabei ausgerastet, so daß die Verbindung Motorwelle 22 - Gewindeteil 30 unterbrochen wird. Damit kann der Stößel 32 über die vorgespannte Schließfeder 54 in Schließrichtung des Schließkörpers 28 verschoben werden. Das Gewindeteil 30 droht sich hierbei leer mit.

Anstelle der in Schließrichtung wirkenden Schließfeder 54 kann bei Bedarf auch eine in Öffnungsrichtung wirkende Schließfeder vorgesehen werden, die in einer Notsituation den Schließkörper 28 in seine Offenstellung bringt.

Zusammenfassend ist folgendes festzustellen: Die Erfindung bezieht sich auf eine Vorrichtung zur Regelung des Massenstromes eines flüssigen oder gasförmigen Mediums und/oder daraus abgeleiteter Regelgrößen. Die einen Druchflußquerschnitt für das Fluid definierende Position eines Stellkörpers 28 wird dabei insbesondere nach Maßgabe einer Regelabweichung entlang einem Verstellweg verstellt. Um schnellablaufende Prozesse regeln zu können, wird erfindungsgemäß ein als Direktantrieb ausgebildeter Servoantrieb für das Regelventil vorgeschlagen, das einen mit einer von der Regelabweichung abhängigen Steuerspannung beaufschlagten Servomotor 20 enthält, dessen mit einer zur Steuerspannung u proportionalen Drehzahl n umlaufende Motorwelle 22 über einen Dreh-Schub-wandler 24 mit dem Stellkörper 28 gekoppelt ist. Des weiteren umfaßt die erfindungsgemäße Vorrichtung eine zwischen Motorwelle und Getriebemittel angeordnete Durchrastkupplung mit einstellbarem Grenzdrehmoment.

## Patentansprüche

1. Vorrichtung zur Regelung, Steuerung oder Schaltung des Durchflusses eines in einer Leitung (10) strömenden Fluides mit einem entlang einem Verstellweg verstellbaren, einen Durchflußquerschnitt begrenzenden Stellkörper (28) mit einer mit einem als Steuerspannung (u) ausgebildeten Steuersignal beaufschlagbaren Motoranordnung, deren mit einer zu der Steuerspannung (u) proportionalen Drehzahl (n) umlaufende Motorwelle (22) über Getriebemittel mit dem Stellkörper (28) gekoppelt ist, dadurch gekennzeichnet, daß die Motoranordnung einen Servomotor (20) aufweist, dessen Motorwelle (22) mit einer zu der Steuerspannung (u) proportionalen Drehzahl (n) umläuft, daß die Getriebemittel als Dreh-Schub-Wandler (24) ausgebildet sind und daß zwischen Motorwelle (22) und Dreh-Schub-Wandler (24) eine Durchrastkupplung (40) mit einstellbarem Grenzdrehmoment angeordnet ist.

2. Vorrichtung nach Anspruch 1, dadurch gekennzeichnet, daß die Durchrastkupplung (40) einen bei Überschreiten des Grenzdrehmomentes oder bei einem Durchrastvorgang ansprechenden Endschalter (52) aufweist.

3. Vorrichtung nach Anspruch 1 oder 2, dadurch gekennzeichnet, daß die Durchrastkupplung (40) torsionssteif ausgebildet und spielfrei gestellt ist.

4. Vorrichtung nach einem der Ansprüche 1 bis 3, dadurch gekennzeichnet, daß die Durchrastkupplung (40) biegeweich ausgebildet ist.

5. Vorrichtung nach Anspruch 4, dadurch gekennzeichnet, daß der Dreh-Schub-Wandler (24) ein mit der Motorwelle (22) mitdrehendes Gewindeteil (30) und einen mit einem Gegengewinde (46) auf dem Gewindeteil (30) drehfest geführten, den Stellkörper (28) tragenden Stößel (32) aufweist.

6. Vorrichtung nach Anspruch 5, dadurch gekennzeichnet, daß das Gewindeteil (30) ein Außengewinde aufweist, auf dem der Stößel (32) mit einem Innengewinde (46) geführt ist.

7. Vorrichtung nach Anspruch 5, dadurch gekennzeichnet, daß das Gewindeteil (30) ein Innengewinde aufweist, in das der Stößel (32) mit einem Außengewinde eingreift.

8. Vorrichtung nach einem der Ansprüche 4 bis 7, dadurch gekennzeichnet, daß der Dreh-Schub-Wandler (24) als Kugelgewindetrieb, Rollengewindetrieb oder Planetenrollengewindetrieb ausgebildet ist.

9. Vorrichtung nach einem der Ansprüche 1 bis 8, dadurch gekennzeichnet, daß der Stellkörper (28) als Lochdrosselkörper, Ventilkörper oder Schieber ausgebildet ist.

10. Vorrichtung nach einem der Ansprüche 5 bis 9, dadurch gekennzeichnet, daß der den Stellkörper (28) tragende Stößel (32) von außen über eine vorzugsweise als Stopfbuchse (36) ausgebildete fluiddichte Schubführung in eine Fluidleitung (10) eingreift.

11. Vorrichtung nach Anspruch 10, gekennzeichnet durch einen zwischen Schubführung (36) und Stößel (32) angeordneten fluiddichten Faltenbalg (34).

12. Vorrichtung nach einem der Ansprüche 1 bis 11, gekennzeichnet durch einen mit dem Stellkörper (28) oder dessen Stößel (32) verbundenen, vorzugsweise induktiven oder inkrementalen Verstellwegaufnehmer (50) oder Wegpotentiometer.

13. Vorrichtung nach einem der Ansprüche 1 bis 12, gekennzeichnet durch mindestens einen entlang dem Verstellweg einstellbar angeordneten, durch den Stellkörper (28) unmittelbar oder mittelbar betätigbaren Endschalter (52).

14. Vorrichtung nach einem der Ansprüche 1 bis 13, dadurch gekennzeichnet, daß der Stellkörper (28) mit einem längs des Verstellweges drehfest geführten Schubrohr (48) verbunden ist.

15. Vorrichtung nach einem der Ansprüche 1 bis 14, dadurch gekennzeichnet, daß der Servomotor (20) eine vorzugsweise elektrisch ansteuerbare Haltebremse aufweist.

16. Vorrichtung nach einem der Ansprüche 1 bis 15, dadurch gekennzeichnet, daß die Durchrastkupplung (40) als vorzugsweise elektromagnetisch betätigbare Schaltkupplung (40') ausgebildet ist.

17. Vorrichtung nach Anspruch 16, dadurch gekennzeichnet, daß die elektromagnetisch betätigbare Schaltkupplung (40') zwischen Motorwelle (22) und Gewindeteil (30) des Dreh-Schub-Wandlers (24) angeordnet ist.

18. Vorrichtung nach Anspruch 17, dadurch gekennzeichnet, daß der Dreh-Schub-Wandler (24) mittels mindestens einer Feder (54) in Öffnungsrichtung oder in Schließrichtung des Schließkörpers (28) vorspannbar und bei gelöster Schaltkupplung (40') unter Durchdrehen des Gewindeteiles (30) in der betreffenden Richtung bewegbar ist.

19. Vorrichtung nach einem der Ansprüche 1 bis 18, dadurch gekennzeichnet, daß der Servomotor (20) in Schließ- und/oder Öffnungsrichtung des Schließkörpers (28) mit einer vorgegebenen zeitabhängigen Steuerspannung (u) ansteuerbar ist.

20. Vorrichtung nach einem der Ansprüche 1 bis 19, dadurch gekennzeichnet, daß der Schließvorgang durch Vorgabe einer von dem Fluiddruck und/oder seiner zeitlichen Änderung abhängigen Steuerspannung (u) regelbar ist.

21. Vorrichtung nach einem der Ansprüche 1 bis 18, dadurch gekennzeichnet, daß die Stellgeschwindigkeit (s) für die Verstellung des Stellkörpers (28) entlang dem Verstellweg sowie die Steuerspannung (u) zur Beaufschlagung des Servomotors (20) jeweils abhängig von einer Regelabweichung (Δm) sind.

22. Vorrichtung nach Anspruch 21, dadurch gekennzeichnet, daß die Steuerspannung (u) als Ausgangssignal eines mit der Regelabweichung (Δm) beaufschlagten Massenstromreglers (16) abgreifbar ist.

## Claims

1. Device for regulation, control or switching of the flow of a fluid flowing in a line (10), comprising an actuating unit (28), which can be adjusted along an adjusting path and limits a flow cross-section, and a motor arrangement capable of being acted upon by a control signal formed as a control voltage (u), of which motor arrangement the motor shaft (22) rotating at a speed (n) proportional to the control voltage (u) is coupled via gearing means to the actuating unit (28), characterised in that the motor arrangement has a servomotor (20), the motor shaft (22) of which rotates at a speed (n) proportional to the control voltage (u), that the gearing means are formed as a rotation-thrust converter (24) and that disposed between the motor shaft (22) and the rotation-thrust converter (24) is an engaging gear (40) with adjustable limit torque.

2. Device according to claim 1, characterised in that the engaging gear (40) has a limit switch (52) which responds in the event of the limit torque being exceeded or in the event of an engaging operation.

3. Device according to claim 1 or 2, characterised in that the engaging gear (40) is formed to be torsion-proof and without play.

4. Device according to one of claims 1 to 3, characterised in that the engaging gear (40) is formed flexibly.

5. Device according to claim 4, characterised in that the rotation-thrust converter (24) has a threaded part (30), which rotates with the motor shaft (22), and a tappet (32) bearing the actuating unit (28), which tappet is carried in torsion-resistant manner by a counter-thread (46) on the threaded part (30).

6. Device according to claim 5, characterised in that the threaded part (30) has an external thread, on which the tappet (32) is carried with an internal thread (46).

7. Device according to claim 5, characterised in that the threaded part (30) has an internal thread, in which the tappet (32) engages with an external thread.

8. Device according to one of claims 4 to 7, characterised in that the rotation-thrust converter (24) is formed as a ball-and-screw spindle drive, roller gear drive or planetary roller gear drive.

9. Device according to one of claims 1 to 8, characterised in that the actuating unit (28) is formed as a multi-orifice restriction plate, valve body or gate valve.

10. Device according to one of claims 5 to 9, characterised in that the tappet (32) carrying the actuating unit (28) engages in a fluid line (10) from outside via a fluid-tight thrust guide formed preferably as a packing gland (36).

11. Device according to claim 10, characterised by a fluid-tight expansion bellows (34) disposed between the thrust guide (36) and the tappet (32).

12. Device according to one of claims 1 to 11, characterised by a preferably inductive or incremental adjusting path sensing element (50) or path potentiometer connected to the actuating unit (28) or its tappet (32).

13. Device according to one of claims 1 to 12, characterised by at least one limit switch (52) disposed to be capable of setting along the adjusting path and capable of actuation directly or indirectly by the actuating unit (28).

14. Device according to one of claims 1 to 13, characterised in that the actuating unit (28) is connected to a torque tube (48) guided along the adjusting path in torsion-resistant manner.

15. Device according to one of claims 1 to 14, characterised in that the servomotor (20) has a holding brake which can be activated preferably electrically.

16. Device according to one of claims 1 to 15, characterised in that the engaging gear (40) is formed as a switchgear (40') which can be actuated preferably electromagnetically.

17. Device according to claim 16, characterised in that the electromagnetically actuatable switchgear (40') is disposed between the motor shaft (22) and the threaded part (30) of the rotation-thrust converter (24).

18. Device according to claim 17, characterised in that the rotation-thrust converter (24) can be pretensioned by means of at least one spring (54) in the direction of opening or direction of closing of the closing element (28) and can be moved in the relevant direction when the switchgear (40') is disengaged during full rotation of the threaded part (30).

19. Device according to one of claims 1 to 18, characterised in that the servomotor (20) can be activated in the direction of closing and/or opening of the closing element (28) by a preset time-dependent control voltage (u).

20. Device according to one of claims 1 to 19, characterised in that the closing operation can be regulated by presetting a control voltage (u) dependent on the fluid pressure and/or its change timewise.

21. Device according to one of claims 1 to 18, characterised in that the actuating velocity (s) for the adjustment of the actuating unit (28) along the adjusting path and the control voltage (u) for acting on the servomotor (20) are each dependent on a deviation (Δm).

22. Device according to claim 21, characterised in that the control voltage (u) can be tapped as the output signal of a mass flow regulator (16) acted upon by the deviation (Δm).

## Revendications

1. Dispositif pour le réglage, la commande ou la commutation du débit d'un fluide s'écoulant dans une conduite (10), comportant un corps de réglage (28) réglable le long d'une course de réglage et limitant une section de passage et comportant un agencement à moteur susceptible d'être alimenté par un signal de commande constitué par une tension de commande (u), dont l'arbre de moteur (22), tournant à une vitesse de rotation (n) proportionnelle à la tension de commande (u), est accouplé via des organes de transmission au corps de réglage (28), caractérisé en ce que l'agencement à moteur présente un servomoteur (20) dont l'arbre moteur (22) tourne à une vitesse de rotation (n) proportionnelle à la tension de commande (u), en ce que les organes de transmission sont réalisés sous forme de transformateurs rotation/poussée (24), et en ce qu'il est prévu entre l'arbre moteur (22) et le transformateur rotation/poussée (24) un accouplement à enclenchement (40) avec un couple de rotation limite réglable.

2. Dispositif selon la revendication 1, caractérisé en ce que l'accouplement à enclenchement (40) présente un commutateur terminal (52) qui réagit lorsque le couple de rotation limite est dépassé, ou lors de l'opération d'enclenchement.

3. Dispositif selon l'une ou l'autre des revendications 1 et 2, caractérisé en ce que l'accouplement à enclenchement (40) est réalisé de façon rigide à la torsion, et réglé sans jeu.

4. Dispositif selon l'une quelconque des revendications 1 à 3, caractérisé en ce que l'accouplement à enclenchement (40) est réalisé de façon flexible.

5. Dispositif selon la revendication 4, caractérisé en ce que le transformateur rotation/poussée (24) présente une pièce à pas de vis (30) tournant avec l'arbre de moteur (22), et un poussoir (32) guidé solidairement en rotation par un pas de vis complémentaire (46) sur la pièce à pas de vis (30) et portant le corps de réglage (28).

6. Dispositif selon la revendication 5, caractérisé en ce que la pièce à pas de vis (30) présente un filetage sur lequel est guidé le poussoir (32) par un taraudage (46).

7. Dispositif selon la revendication 5, caractérisé en ce que la pièce à pas de vis (30) présente un taraudage dans lequel s'engage le poussoir (32) par un filetage.

8. Dispositif selon l'une quelconque des revendications 4 à 7, caractérisé en ce que le transformateur rotation/poussée (24) est réalisé sous forme de vis à billes, de vis à galets ou de vis à galets planétaires.

9. Dispositif selon l'une quelconque des revendications 1 à 8, caractérisé en ce que le corps de réglage (28) est réalisé sous forme d'un corps d'étranglement pour un trou, d'un corps de vanne, ou d'un tiroir.

10. Dispositif selon l'une quelconque des revendications 5 à 9, caractérisé en ce que le poussoir (32) portant le corps de réglage (28) s'engage depuis l'extérieur dans une conduite de fluide (10) via un guidage coulissant étanche aux fluides et réalisé de préférence sous forme d'un presse-étoupe (36).

11. Dispositif selon la revendication 10, caractérisé par un soufflet (34) étanche aux fluides agencé entre le guidage coulissant (36) et le poussoir (32).

12. Dispositif selon l'une quelconque des revendications 1 à 11, caractérisé par un capteur de course de réglage (50) ou un potentiomètre de course qui est relié au corps de réglage (28) ou à son poussoir (32), et qui est de préférence inductif ou incrémentiel.

13. Dispositif selon l'une quelconque des revendications 1 à 12, caractérisé par au moins un commutateur terminal (52) agencé de façon réglable le long de la course de réglage et susceptible d'être actionné directement ou indirectement par le corps de réglage (28).

14. Dispositif selon l'une quelconque des revendications 1 à 13, caractérisé en ce que le corps de réglage (28) est relié à un tube coulissant (48) guidé solidairement en rotation le long de la course de réglage.

15. Dispositif selon l'une quelconque des revendications 1 à 14, caractérisé en ce que le servomoteur (20) présente un frein d'arrêt qui peut être piloté de préférence électriquement.

16. Dispositif selon l'une quelconque des revendications 1 à 15, caractérisé en ce que l'accouplement à enclenchement (40) est réalisé sous forme d'un accouplement de commutation (40') susceptible d'être actionné de préférence par voie électromagnétique.

17. Dispositif selon la revendication 16, caractérisé en ce que l'accouplement de commutation (40') susceptible d'être actionné par voie électromagnétique est agencé entre l'arbre de moteur (22) et la pièce à pas de vis (30) du transformateur rotation/poussée (24).

18. Dispositif selon la revendication 17, caractérisé en ce que le transformateur rotation/poussée (24) peut être mis sous précontrainte en direction d'ouverture ou en direction de fermeture du corps d'obturation (28) au moyen d'au moins un ressort (54), et en ce qu'il est mobile dans la direction correspondante en tournant la pièce à pas de vis (30) lorsque l'accouplement de commutation (40') est libéré.

19. Dispositif selon l'une quelconque des revendications 1 à 18, caractérisé en ce que le servomoteur (20) peut être piloté en direction de fermeture et/ou d'ouverture du corps d'obturation (28) avec une tension de commande (u) prédéterminée en dépendance du temps.

20. Dispositif selon l'une quelconque des revendications 1 à 19, caractérisé en ce que l'opération de fermeture est réglable par détermination d'une tension de commande (u) dépendante de la pression de fluide et/ou de sa modification dans le temps.

21. Dispositif selon l'une quelconque des revendications 1 à 18, caractérisé en ce que la vitesse de réglage (s) pour le réglage du corps de réglage (28) le long de la course de réglage ainsi que la tension de commande (u) pour l'alimentation du servomoteur (20) dépendent respectivement d'une déviation de réglage (Δm).

22. Dispositif selon la revendication 21, caractérisé en ce que la tension de commande (u) peut être détectée en tant que signal de sortie d'un régulateur de débit de masse (16) piloté par la déviation de réglage (Δm),
